(19) Europäisches Patentamt / European Patent Office / Office européen des brevets

(11) **EP 2 927 051 B1**

(12) **FASCICULE DE BREVET EUROPEEN**

(45) Date de publication et mention
de la délivrance du brevet:
**08.09.2021 Bulletin 2021/36**

(51) Int Cl.:
**B60Q 1/08** *(2006.01)*     **F21Y 113/13** *(2016.01)*
**F21S 41/125** *(2018.01)*     **F21S 41/141** *(2018.01)*
**F21S 41/14** *(2018.01)*

(21) Numéro de dépôt: **15160281.0**

(22) Date de dépôt: **23.03.2015**

(54) **SYSTÈME D'ÉCLAIRAGE À COULEUR ADAPTATIVE**

BELEUCHTUNGSVORRICHTUNG MIT ANPASSBARER FARBE

LIGHTING SYSTEM WITH ADAPTIVE COLOUR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.04.2014 FR 1452859**

(43) Date de publication de la demande:
**07.10.2015 Bulletin 2015/41**

(73) Titulaire: **VALEO VISION**
**93012 Bobigny Cedex (FR)**

(72) Inventeur: **Godbillon, Vincent**
**75011 PARIS (FR)**

(56) Documents cités:
**EP-A1- 2 213 512**     **WO-A1-02/04247**
**DE-A1-102011 077 282**     **DE-A1-102011 113 956**
**JP-A- 2013 125 693**     **JP-U- H0 648 102**
**US-A1- 2006 044 818**     **US-A1- 2014 049 973**

• **None**

**Description**

La présente invention a trait au domaine de l'éclairage et elle concerne plus particulièrement un système d'éclairage pour véhicule automobile apte à émettre un faisceau lumineux sur une scène de route qui s'étend devant le véhicule.

On connaît de tels systèmes qui comportent des moyens d'éclairage aptes à émettre un faisceau, par exemple à l'aide d'un ou plusieurs réflecteurs. Les moyens d'éclairage utilisés peuvent être de différentes formes et on utilise de plus en plus régulièrement des diodes électroluminescentes à cet effet.

On connaît également des systèmes d'éclairage générant un faisceau dont la teinte est variable en fonction de paramètres du véhicule ou de l'environnement. Les documents WO 02/04247 A1, DE 10 2011 077 282 A1, DE 10 2011 113 956 A1 illustrent les connaissances de l'homme du métier au moment de l'invention.

Afin de respecter les normes réglementaires propres à l'éclairage des véhicules automobiles, les systèmes d'éclairage doivent émettre des rayons lumineux d'une couleur donnée. A titre d'exemple, en France, les feux de croisement et les feux de route peuvent émettre une lumière blanche, et les feux diurnes doivent émettre une lumière blanche. Pendant toute la durée d'utilisation d'un type de feux donné, la couleur de l'éclairage reste la même.

Or, la teinte de la route peut varier suivant la nature, l'âge et l'état de propreté du revêtement de la scène de route. La présence éventuelle de neige ou d'autres substances sur la chaussée peut également modifier la teinte de la route. Par ailleurs, le système d'éclairage du véhicule automobile doit éclairer la route qui s'étend devant le véhicule, mais également les bas-côtés, de manière à ce que le conducteur soit averti des risques éventuels pouvant prendre naissance sur ces bas-côtés. Or ces bas-côtés présentent des couleurs variées et différentes de celles de la route. En outre, la scène de route située devant le véhicule à un instant T ne réfléchit pas le faisceau de la même façon que la scène de route située devant le véhicule à un instant T+1.

On fait donc le constat que l'éclairage n'est en général pas optimisé par rapport aux différentes scènes de route qui peuvent s'étendre au fur et à mesure devant le véhicule. La lumière réfléchie par la scène de route pourra être différente pour un éclairage standard et cette différence de perception visuelle par l'utilisateur pourra le gêner.

La présente invention se place dans ce contexte et a pour objet de proposer un système d'éclairage qui prenne en compte le coefficient de réflexion des différents éléments de la scène de route, c'est-à-dire aussi bien la chaussée que le bas-côté, dans la gestion de l'éclairage.

A cet effet, l'invention propose un système d'éclairage pour véhicule automobile, comportant des moyens d'éclairage aptes à émettre ensemble un faisceau global présentant au moins une couleur, des moyens d'acquisition d'un rayon lumineux dudit faisceau global après réflexion dudit rayon sur un élément de la scène de route, des moyens de traitement du rayon acquis pour obtenir une information relative à la couleur dudit élément de la scène de route et des moyens de commande pour modifier la couleur du faisceau global en fonction de cette information, les moyens d'éclairage comportant chacun au moins une diode électroluminescente, les diodes étant blanches de teintes différentes les unes des autres.

Ainsi, on peut adapter le type de rayons lumineux émis par une source lumineuse pour que la perception de la scène de route par l'utilisateur soit optimale. A titre d'exemple, on comprend que l'herbe ou des arbres ont naturellement tendance à réfléchir plutôt du vert. Si les moyens d'éclairage du véhicule sont réglés pour que le système d'éclairage puisse émettre un faisceau global plus vert, on permet à l'utilisateur de mieux distinguer le bas-côté.

Selon une caractéristique d'un système d'éclairage dans un premier mode de réalisation, les moyens d'éclairage consistent en un module lumineux unique apte à émettre ledit faisceau global. La modification de la couleur émise impacte ainsi directement la couleur du faisceau global.

Selon des caractéristiques d'un système d'éclairage dans un deuxième mode de réalisation, les moyens d'éclairage consistent en une pluralité de sources lumineuses, de sorte que le faisceau global est formé par des sous-faisceaux émis respectivement par chacune des sources lumineuses. Le cas échéant, les moyens d'éclairage sont agencés de manière à ce que ces sous-faisceaux se superposent les uns aux autres, notamment sur une majeure partie, voire la totalité, pour former le faisceau global, et chaque sous-faisceau présente une couleur commandable individuellement par les moyens de commande pour modifier la couleur du faisceau global qu'il forme.

Ainsi, on obtient une meilleure intensité lumineuse du fait de l'augmentation du nombre de sources lumineuses et on offre la possibilité de jouer plus finement sur les modifications de la couleur du faisceau global par une gestion des couleurs des sous-faisceaux. Par la notion de superposition, on comprend que la majeure partie des sous-faisceaux sont confondus, de sorte que le faisceau global est sensiblement de même dimensions que celles de chaque sous-faisceau. Et on comprend que par " majeure partie ", on estime à 90% la part de la surface projetée sur la route de chaque sous-faisceau qui se combine avec les autres sous-faisceaux pour former le faisceau global.

Selon un agencement particulier de l'invention dans son deuxième mode de réalisation, la pluralité de sources lumineuses est disposée dans un même module lumineux. Les moyens d'éclairage peuvent alors être avantageusement réalisés par une diode multipuces disposée au foyer d'un moyen optique de projection disposé dans ledit module lumineux. Dans ce contexte, chaque puce de la diode mulitpuces et le moyen optique associé réalise alors un des moyens d'éclairage. Avantageusement, au moins deux puces émettent de la lumière de couleur distincte l'une de l'autre.

Selon un agencement différent, les moyens d'éclairage sont disposés dans plusieurs modules. On peut alors prévoir une pluralité de moyens d'acquisition en associant individuellement chacun de ces moyens d'acquisition à chaque module lumineux. La pluralité de moyens d'acquisition est reliée à un moyen de traitement unique ainsi qu'à un moyen de commande unique.

Dans ce contexte, les sous-faisceaux se superposent pour former des faisceaux intermédiaires, l'ensemble des faisceaux intermédiaires se complétant pour former ledit faisceau global. Ces faisceaux intermédiaires peuvent se superposer les uns aux autres, notamment sur une majeure partie, pour former le faisceau global, ou bien ils peuvent être juxtaposés les uns par rapport aux autres. Comme précédemment, chaque sous-faisceau présente une couleur commandable individuellement par les moyens de commande pour modifier cette fois la couleur du faisceau intermédiaire qu'il forme. Et cette modification de la couleur de l'un ou l'autre des faisceaux intermédiaires, ou de plusieurs simultanément, entraîne la modification de la couleur du faisceau global.

Chaque moyen d'éclairage peut être commandé par un moyen de commande qui lui est propre, par exemple un circuit de pilotage. En variante, tous les moyens d'éclairage peuvent être commandés par un moyen de commande unique.

Chaque moyen d'éclairage comporte au moins une diode électroluminescente, et que chacune de ces diodes émet une teinte de blanc différente. Chaque moyen d'éclairage peut ainsi être réalisé par une diode électroluminescente distincte, disposée au voisinage du foyer du moyen optique de projection.

Chaque moyen d'éclairage est apte à émettre de la lumière, chaque lumière émise par un des moyens présentant une teinte de blanc différentes des autres, ces teintes correspondant notamment chacune à l'une des bornes de délimitation du blanc réglementaire dans un diagramme de chromaticité. Une combinaison est obtenue via un choix déterminé d'intensité lumineuse de la lumière émise par chaque moyen. Il est ainsi possible d'obtenir une pluralité de teintes de blanc couvrant la totalité des teintes de blanc réglementaire en variant ces intensités.

Le cas échéant, chaque module comporte un moyen optique de projection associé à la ou aux diodes disposées dans le module, chaque diode et le moyen optique de projection d'un module réalisant un moyen d'éclairage, la ou les diodes d'un module étant disposée sur ou au voisinage du foyer dudit moyen optique de projection. Avantageusement, chaque module comporte une unique diode électroluminescente associé à un moyen optique de projection, chaque module réalisant un moyen d'éclairage.

Selon différentes caractéristiques de l'invention, les moyens d'acquisition sont formés par une cellule photoélectrique comportant un capteur photosensible, ou par une caméra vidéo. Et les moyens de traitement comportent des moyens d'analyse de la réflexivité spectrale de la route, par comparaison entre la lumière émise par le projecteur et la lumière renvoyée par le revêtement.

On pourra envisager que le système selon l'invention comporte également des moyens de mesure de la distance entre le véhicule et l'élément de la scène de route qui réfléchit le rayon lumineux acquis par le système.

L'invention concerne en outre un procédé d'éclairage d'une scène de route mis en œuvre par un système d'éclairage tel qu'il vient d'être décrit précédemment. Ce procédé comprend successivement une première étape d'éclairage de la scène de route qui s'étend devant le véhicule automobile par un faisceau global d'une première couleur, une étape d'acquisition d'un rayon lumineux obtenu par réflexion du faisceau global par un élément de ladite scène de route, une étape de traitement du signal acquis dans l'étape précédente lors de laquelle on détermine si la couleur du rayon lumineux réfléchi correspond à la première couleur du faisceau global émis dans la première étape d'éclairage, et une étape de modification de la couleur du faisceau global projeté en fonction des résultats de l'étape de traitement de signal.

Selon une caractéristique particulière du procédé, on peut réaliser en outre une étape de mesure de la distance entre le véhicule et l'élément de la scène de route réfléchissant le rayon lumineux acquis, la distance étant prise en compte pour l'étape de modification de la couleur du faisceau global, la teinte de la première couleur du faisceau global étant atténuée ou amplifiée en fonction de la distance de l'objet.

L'invention concerne également un véhicule automobile dans lequel on prévoit un système d'éclairage tel qu'il vient d'être décrit précédemment.

D'autres caractéristiques et avantages de l'invention apparaîtront à la lecture de la description détaillée d'un mode de réalisation qui va suivre et pour la compréhension de laquelle on se reportera aux figures annexées parmi lesquelles :

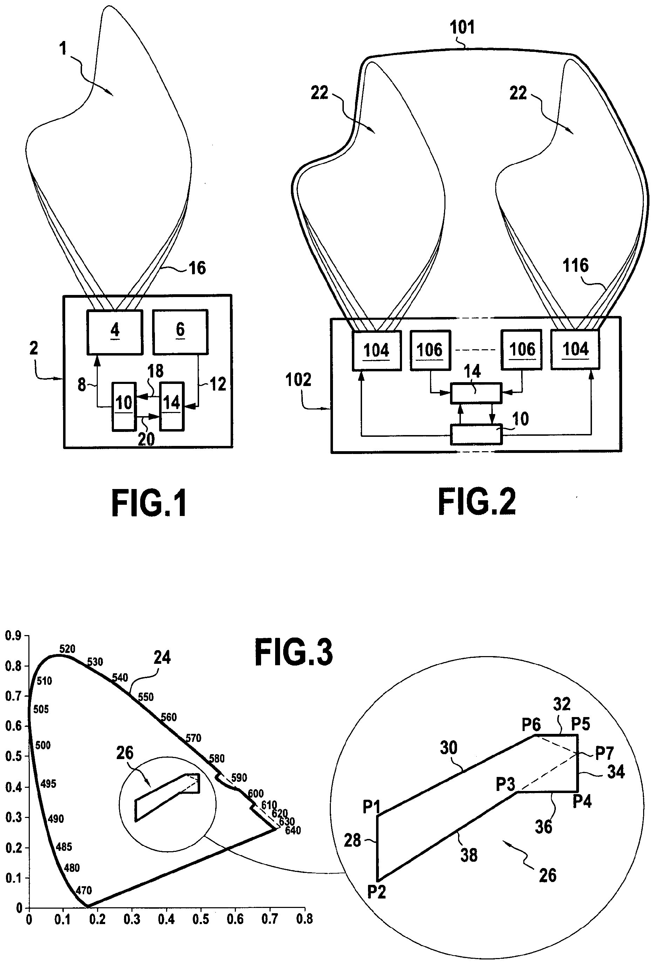

- la figure 1 est une représentation schématique du système selon un premier mode de réalisation comportant un module d'émission de lumière, des moyens d'acquisitions associés, un module d'analyse et un module de commande, sur laquelle le faisceau global illustré est formé par des sous-faisceaux superposés ;

- la figure 2 est une représentation schématique du système selon un deuxième mode de réalisation comportant une pluralité de modules d'émission de lumière, des moyens d'acquisitions associés, un module d'analyse et un module de commande, sur laquelle le faisceau global illustré est formé par des faisceaux intermédiaires juxtaposés formés par des sous-faisceaux superposés ; et

- la figure 3 correspond à un diagramme de chromaticité sur lequel on a représenté la zone de blancs réglementaires et les couleurs des diodes qui sont montées dans un module d'émission de lumière dans un mode de réalisation particulier de l'invention.

Un système d'éclairage selon l'invention comporte au moins un module d'émission d'un faisceau global de lumière sur une scène de route qui s'étend devant le véhicule, des moyens d'acquisition d'une image de cette scène de route, des moyens d'analyse d'une image acquise et des moyens de commande pour modifier la couleur des rayons lumineux émis par le module d'émission.

Dans l'exemple de réalisation illustré sur la figure 1, un seul module d'émission de lumière est prévu, tandis que dans l'exemple de réalisation illustré sur la figure 2, plusieurs modules d'émission de lumière participent à l'émission du faisceau global 101.

On va maintenant décrire le premier mode de réalisation, illustré sur la figure 1. Le système d'éclairage 2 comporte un module d'émission 4 auquel sont associés des moyens d'acquisition 6, ledit module étant apte à recevoir une instruction de commande 8 provenant des moyens de commande 10 tandis que les moyens d'acquisition sont aptes à envoyer une donnée 12 aux moyens d'analyse 14 qui communique avec les moyens de commande pour l'élaboration de l'instruction de commande. L'ensemble de ces éléments est avantageusement regroupé dans un projecteur de feux avant d'un véhicule automobile.

Le module d'émission de lumière est apte à générer un faisceau global présentant au moins une couleur. Il comporte à cet effet une pluralité de sources lumineuses, ainsi qu'un système optique disposé au voisinage des sources lumineuses. Chaque source est apte à émettre des rayons lumineux que le système optique oriente en sortie vers la scène de route, en formant un sous-faisceau 16, de couleur donnée. La superposition au moins partielle de l'ensemble des sous-faisceaux génère le faisceau global 1 d'une couleur résultante de la synthèse additive de l'ensemble des couleurs des sous-faisceaux. Tel que cela est visible sur la figure 1, les sous-faisceaux se superposent les uns aux autres dans leur majeure partie, c'est-à-dire sur au moins 90 % de leur étendue.

Les sources lumineuses sont réalisées ici par des diodes électroluminescentes.

Dans un mode d'application préférée de ce premier mode de réalisation, on prévoit que la pluralité de diodes consiste en une diode multipuces, à savoir plusieurs éléments semi-conducteurs qui partagent un même substrat, le tout étant encapsulé dans un boîtier unique. Ce type de réalisation, connu aussi sous le nom de diodes multichip, est de taille réduite et peut être placé au foyer du système optique.

Dans le présent exemple, on prévoit de réaliser le sous-faisceau avec des rayons lumineux issus de diodes blanches de teintes différentes les uns des autres. On peut choisir à l'origine la teinte du faisceau global, de couleur blanche, en jouant via le module de commande sur l'allumage ou l'extinction de telle ou telle diode, ou en jouant sur l'intensité d'éclairage de celles-ci.

La couleur et l'intensité du flux lumineux sont pilotés par le module de commande, embarqué dans le module d'émission de lumière, et qui émet à l'origine des instructions de commande pour l'allumage des diodes.

Dans une variante qui n'est pas couverte par l'invention, on pourra prévoir que les diodes émettent des couleurs autres que blanche, en s'assurant que la combinaison de toutes les couleurs donne du blanc. On pourra par exemple choisir trois diodes rouges vertes et bleues. On comprend toutefois que le choix, selon l'invention, de diodes émettant des teintes de blancs différentes est plus avantageux car il permet de continuer à produire la lumière blanche si l'une des diodes est défectueuse.

Les moyens d'acquisition 6 sont orientés sur la scène de route qui s'étend devant le véhicule. Ils prennent avantageusement la forme de cellules photoélectriques composées d'un capteur photosensible, dont la résistance électrique fluctue quand il est soumis à un rayonnement lumineux, et d'un circuit électrique apte à communiquer l'information relative au changement de résistance.

On peut prévoir que le système d'éclairage comporte une seule cellule de ce type, apte à saisir une image de l'ensemble de la scène de route, ou que le système d'éclairage comporte une pluralité de ces cellules photoélectriques, chacune ciblant une partie restreinte de la scène de route, notamment grâce à des moyens optiques associés. Des lentilles peuvent être utilisées pour augmenter la perception des cellules photoélectriques.

Dans une variante, les moyens d'acquisition peuvent prendre la forme d'une caméra à grand angle, filmant en continu la scène de route défilant devant le véhicule.

Dans tous les cas, les images saisies par les moyens d'acquisition sont transmises à un système d'analyse et d'asservissement de la couleur, qui comporte les moyens d'analyse 14 par traitement d'image et les moyens de commande 10 des sources lumineuses du module d'émission de lumière.

Les moyens d'analyse par traitement d'images sont aptes à recevoir une donnée 12 en provenance des moyens d'acquisition, à traiter cette donnée pour élaborer une première information 18 relative à la couleur du rayon lumineux réfléchi par la scène de route, et à transmettre aux moyens de commande cette première information. Les moyens d'analyse calculent la réponse spectrale de l'élément de la scène de route, en comparant le spectre coloré émis et le spectre coloré réfléchi par la scène de route analysée. L'information 20 sur le spectre coloré émis est donnée par les moyens de commande dans la boucle précédente, tandis que le spectre coloré réfléchi est calculé sur la base de la donnée reçue des moyens d'acquisition. Ces moyens d'analyse peuvent par exemple comporter un spectomètre.

Ainsi, en fonction de la réflectivité spectrale, on analyse quelles sont les couleurs les mieux réfléchies. Avec cette information relative à la couleur ou aux couleurs les mieux réfléchis, on prévoit alors de renforcer l'émission du projecteur dans les teintes de blancs tendant vers ces couleurs, afin d'améliorer la visibilité, dans la limite de la couleur réglementaire. On vise ainsi à émettre plus de lumière dans les longueurs d'onde les plus réfléchies, afin d'augmenter la perception du faisceau par l'utilisateur du véhicule.

Les moyens de commande reçoivent l'information et ils préparent une instruction de commande pour asservir la teinte du faisceau émis par le module d'émission de lumière, en augmentant ou en atténuant l'intensité lumineuse émise par l'une ou l'autre des diodes présentes dans le module, voire en éteignant ou en allumant l'une ou l'autre de ces diodes.

On va maintenant décrire le deuxième mode de réalisation, illustré sur la figure 2. On constate que les deux modes de réalisation sont identiques dans le fait que le système d'éclairage comporte un système d'analyse et d'asservissement de la couleur, ainsi que des moyens d'acquisition de la lumière réfléchie par un élément de cette de route. Le deuxième mode de réalisation diffère dans le nombre de modules d'émission de lumière.

Le système d'éclairage 102 selon le deuxième mode de réalisation comporte une pluralité de modules d'émission de lumière 104. Chacun de ces modules comporte une ou plusieurs sources lumineuses associées à un système optique. Là encore, les sources sont formées avantageusement avec des diodes électroluminescentes et lorsque l'on a une pluralité de diodes, elles consistent avantageusement en une diode multipuces disposée au foyer du système optique de chaque module.

Dans l'exemple de réalisation illustré sur la figure 2, où plusieurs sources lumineuses sont prévues dans chacun des modules d'émission de lumière, chaque module d'émission est alors apte à émettre un faisceau intermédiaire 22, formé par les différents sous-faisceaux 116 émis respectivement par chacune des sources lumineuses, et c'est la combinaison, par superposition ou juxtaposition, de ces faisceaux intermédiaires qui génère le faisceau global 101.

On pourra notamment utiliser l'exemple de réalisation illustré sur la figure 2, lorsque les faisceaux intermédiaires sont juxtaposés, pour une application de type « faisceau matriciel ». Le faisceau global est ainsi décomposé en des bandes longitudinales sur lesquelles on peut agir distinctement, et selon l'invention, la modification de la couleur du faisceau global est effectuée par une modulation spécifique de la couleur de chaque bande du faisceau, en particulier pour prendre en considération les écarts de réflectivités des différents éléments de la scène.

Tel que cela est visible sur la figure 2, on associe individuellement des moyens d'acquisition 106 à chaque module d'émission de lumière, de manière à ce que chaque moyen soit plus spécifiquement ciblé sur la zone, ou la bande, d'émission de lumière par le module correspondant.

On va maintenant détailler un exemple d'application du premier mode de réalisation, dans lequel un même module d'émission de lumière comporte quatre diodes électroluminescentes. Ces quatre diodes sont aptes à émettre en combinaison un rayon lumineux dont la couleur est caractéristique d'une lumière blanche réglementaire. Toutefois, on choisit ces diodes pour qu'elles présentent des longueurs d'onde d'émission différentes les unes des autres.

On utilise pour l'optimisation du choix des couleurs un diagramme de chromaticité, tel qu'illustré sur la figure 3, sur lequel les couleurs sont représentées en fonction de leur coordonnées x et y. Ce diagramme comporte une représentation du « spectrum locus » 24 et de la « zone de blancs réglementaires » 26.

Le « spectrum locus » est une ligne courbe sur laquelle sont disposées les couleurs pures dans l'ordre de leur longueur d'onde caractéristique. La couleur pure de teinte bleue est disposée à une extrémité du spectrum locus et les couleurs pures de teinte cyan, verte, jaune, ambre et rouge se succèdent dans cet ordre les unes après les autres. A l'intérieur de ce spectrum locus, les différentes couleurs découlant de chacune des teintes sont placées en fonction de leur saturation, c'est-à-dire de leur pureté, en se rapprochant au centre du diagramme d'une zone dans laquelle elles tendent vers le blanc.

La « zone des blancs réglementaires » correspond aux variations de blanc, en limite des couleurs les moins pures de chacune des teintes, que le règlement propre à l'éclairage diurne des véhicules automobiles a défini et que les constructeurs automobiles doivent respecter pour voir leurs véhicules homologués et aptes à être commercialisés. Cette zone des blancs réglementaires est définie par un hexagone dont les six côtés ont les équations caractéristiques suivantes :

Premier côté 28, dit côté de limite de la teinte bleue :

$$x \geq 0.310$$

Deuxième 30 et troisième 32 côté, dit côtés de limite de la teinte verte :

$$y \leq 0.150 + 0.640\ x \text{ et } y \leq 0.440$$

Quatrième côté 34, dit côté de limite de la teinte jaune :

$$x \leq 0.500$$

Cinquième côté 36, dit côté de limite de la teinte rouge :

$$y \geq 0.382$$

Sixième côté 38, dit côté de limite de la teinte violette ou pourpre :

$$y \geq 0.050 + 0.750\ x$$

Les sommets du polygone ont respectivement pour couple de coordonnées (x, y) :

P1 (0.310, 0.348), P2 (0.310, 0.283), P3 (0.443, 0.382),
P4 (0.500, 0.382), P5 (0.500, 0.440), P6 (0.453, 0.440).

La première des quatre diodes est choisie pour qu'elle émette un rayon lumineux dont la couleur est sensiblement égale à la couleur définie sur le diagramme de chromaticité par le sommet P1. La deuxième diode et la troisième diode sont respectivement aptes à émettre un rayon lumineux dont la couleur est sensiblement égale à la couleur définie par respectivement les sommets P2 et P6, et on choisit la longueur d'onde à laquelle émet la quatrième diode par construction géométrique sur le spectrum locus. Le point correspondant P7 est ainsi situé sur le quatrième côté 34, dans le prolongement du sixième côté 38. Ce choix du nombre de diodes et de la longueur d'émission est doublement avantageux en ce qu'il permet de couvrir une grande plage de couleur réglementaire, et il permet de garder une couleur conforme en cas de défaillance d'une des diodes. Si c'est par exemple la quatrième diode qui vient à défaillir, on peut observer sur la figure 3 que la synthèse additive des rayons lumineux émis par les trois diodes restantes donnera un faisceau de lumière respectant la norme réglementaire de la couleur blanche.

Le système d'éclairage qui vient d'être décrit pourra comporter en outre des moyens complémentaires, et par exemple des moyens de détection de la défaillance d'une diode électroluminescente, afin de corriger les flux d'émission des autres diodes pour garder une couleur réglementaire. Il pourra également comporter des moyens de détection de position des éléments de la scène de route, afin de déterminer la proximité de ces éléments par rapport au véhicule. Cette information est alors transmise au système d'analyse et d'asservissement et celui-ci en tient compte pour décider dans quelles proportions augmenter ou diminuer l'intensité de la couleur émise par les moyens d'éclairage, par exemple afin d'éviter une surintensité lumineuse si l'utilisateur est proche de l'élément de la scène de route.

La description qui précède explique clairement comment l'invention permet d'atteindre les objectifs qu'elle s'est fixés et notamment de proposer un système d'éclairage qui permet d'analyser en temps réel la réflectivité spectrale de la route par comparaison entre la lumière émise par le projecteur et la lumière renvoyée par le revêtement et qui prend en compte cette analyse en temps réel pour modifier la lumière émise par le projecteur pour que celle-ci soit optimisée.

Ces avantages sont obtenus quel que soit le nombre de modules d'émission de lumière prévus dans le système d'éclairage et quel que soit le nombre de sources lumineuses prévues dans les modules d'émission.

Bien entendu, diverses modifications peuvent être apportées par l'homme du métier aux modes de réalisation du système d'éclairage, qui viennent d'être décrits à titre d'exemples non limitatifs, dès lors que ces systèmes d'éclairage permettent de modifier la couleur d'un faisceau global en fonction d'une information acquise par le système sur la nature de la scène de route qui s'étend devant le véhicule.

Dans une variante non représentée et qui n'est pas selon l'invention, on pourra par exemple imaginer que les moyens d'éclairage consistent en des sources lumineuses du type lampe à incandescence ou halogène auxquelles on adjoint des filtres colorés, le système d'analyse et d'asservissement étant alors apte à déterminer quel type de filtre il faut disposer devant une ou plusieurs sources lumineuses pour modifier la couleur du faisceau global, et le système d'éclairage comportant une pluralité de filtres colorés que l'on dispose devant les sources lumineuses en fonction des calculs du système d'analyse et d'asservissement.

Dans une autre variante représentée, on pourra envisager que les moyens d'acquisition, le système d'analyse et d'asservissement de la couleur, et le système de détection de défaillance des diodes soient situées en dehors du projecteur.

Par ailleurs, on pourra prévoir dans chaque module un nombre différent de diodes électroluminescentes, même s'il convient de noter que le nombre de quatre, ou de cinq, est particulièrement intéressant pour les avantages précédemment cités à l'occasion de la description de l'utilisation du diagramme de chromaticité.

Enfin, on pourra prévoir des aménagements du système pour optimiser le calcul et par exemple une modification du système d'analyse et d'asservissement pour prévoir une boucle de calcul qui prend en compte plusieurs analyses successives de la scène de route avant de modifier éventuellement la couleur du faisceau global. On filtre ainsi des réponses aléatoires données par un élément de la scène de route ponctuel sans rapport avec la scène de route dans son intégralité.

**Revendications**

1. Système d'éclairage (2 ; 102) pour véhicule automobile, comportant des moyens d'éclairage aptes à émettre ensemble un faisceau global (1 ; 101) présentant au moins une couleur, des moyens d'acquisition (6 ; 106) d'un rayon lumineux dudit faisceau global après réflexion dudit rayon sur un élément de la scène de route, des moyens d'analyse (14) du rayon acquis pour obtenir une information relative à la couleur dudit élément de la scène de route et des moyens de commande (10) pour modifier la couleur du faisceau global en fonction de cette information, **caractérisé en ce que** les moyens d'éclairage comportent chacun au moins une diode électroluminescente, les diodes étant blanches de teintes différentes les unes des autres.

2. Système d'éclairage selon la revendication 1, **caractérisé en ce que** les moyens d'éclairage sont disposés dans un même module d'émission de lumière (4).

3. Système d'éclairage selon la revendication 2, **caractérisé en ce que** les moyens d'éclairage comportent au moins une diode électroluminescente multipuces disposée au foyer d'un moyen optique de projection disposé dans ledit module d'émission de lumière (4).

4. Système d'éclairage selon la revendication 1, **caractérisé en ce que** les moyens d'éclairage sont disposés dans plusieurs modules d'émission de lumière (104).

5. Système d'éclairage selon la revendication 4, **caractérisé en ce que** chaque moyen d'éclairage comporte au moins une diode électroluminescente, les diodes émettant chacune une couleur différente.

6. Système d'éclairage selon l'une des revendications 1 à 5, **caractérisé en ce que** chaque moyen d'éclairage est apte à émettre de la lumière, chaque lumière émise par un des moyens présentant une teinte de blanc différente des autres, ces teintes correspondant notamment chacune à l'une des bornes de délimitation du blanc réglementaire dans un diagramme de chromaticité.

7. Système d'éclairage selon l'une des revendications 1 à 5, **caractérisé en ce que** chaque moyen d'éclairage est apte à émettre de la lumière, chaque lumière émise par un des moyens présentant une couleur, l'ensemble de ces couleurs étant telles qu'une teinte de blanc réglementaire souhaitée dans un diagramme de chromaticité puisse être obtenue via une combinaison de ces couleurs.

8. Système d'éclairage selon l'une des revendications 1 à 7, **caractérisé en ce que** les moyens d'éclairage sont aptes à former chacun un sous-faisceau (16 ; 116), l'ensemble des sous-faisceaux formant le faisceau global (1 ; 101).

9. Système d'éclairage selon la revendication 8, **caractérisé en ce que** les sous-faisceaux (16 ; 116) se superposent les uns aux autres, notamment sur une majeure partie, voire la totalité, pour former le faisceau global (1).

10. Système d'éclairage selon la revendication 8, **caractérisé en ce que** les sous-faisceaux (116) sont groupés en plusieurs groupes de sous-faisceaux, les sous-faisceaux de chaque groupe se superposant, notamment sur une majeure partie, pour former un faisceau intermédiaire (22), l'ensemble des faisceaux intermédiaires se complétant et/ou se superposant et/ou se juxtaposant pour former ledit faisceau global (101).

**11.** Système d'éclairage selon l'une des revendications 8 à 10, **caractérisé en ce que** chaque sous-faisceau (16 ; 116) présente une couleur commandable individuellement par les moyens de commande (10) pour modifier la couleur du faisceau global (1 ; 101) qu'il forme.

**12.** Système d'éclairage selon l'une des revendications 1 à 11, **caractérisé en ce qu'**une pluralité de moyens d'acquisition (106) est prévue de sorte que ces moyens d'acquisition soient individuellement associés à chaque moyen d'éclairage.

**13.** Système d'éclairage selon l'une des revendications précédentes, **caractérisé en ce que** les moyens d'analyse comportent des moyens d'analyse de la réflexivité spectrale de la route, par comparaison entre la lumière émise par le projecteur et la lumière renvoyée par le revêtement.

**14.** Procédé d'éclairage d'une scène de route mis en œuvre par un système d'éclairage selon l'une des revendications précédentes, **caractérisé en ce qu'**il comprend successivement une première étape d'éclairage de la scène de route qui s'étend devant le véhicule automobile par un faisceau global (1 ; 101) d'une première couleur, une étape d'acquisition d'un rayon lumineux obtenu par réflexion du faisceau global par un élément de ladite scène de route, une étape de traitement du signal acquis dans l'étape précédente lors de laquelle on détermine si la couleur du rayon lumineux réfléchi correspond à la première couleur du faisceau global émis dans la première étape d'éclairage, et une étape de modification de la couleur du faisceau global projeté en fonction des résultats de l'étape de traitement de signal.

**15.** Véhicule automobile comportant un système d'éclairage (2 ; 102) selon l'une des revendications 1 à 13.

**Patentansprüche**

**1.** Beleuchtungssystem (2; 102) für ein Kraftfahrzeug, das Beleuchtungseinrichtungen, die fähig sind, zusammen ein globales Strahlenbündel (1; 101) zu emittieren, das mindestens eine Farbe aufweist, Erfassungseinrichtungen (6; 106) eines Lichtstrahls des globalen Strahlenbündels nach Reflexion des Strahls auf einem Element der Straßenszene, Analyseeinrichtungen (14) des erfassten Strahls, um eine Information bezüglich der Farbe des Elements der Straßenszene zu erhalten, und Steuereinrichtungen (10) aufweist, um die Farbe des globalen Strahlenbündels abhängig von dieser Information zu ändern, **dadurch gekennzeichnet, dass** die Beleuchtungseinrichtungen je mindestens eine Elektrolumineszenzdiode aufweisen, wobei die Dioden weiß mit voneinander unterschiedlichen Farbtönen sind.

**2.** Beleuchtungssystem nach Anspruch 1, **dadurch gekennzeichnet, dass** die Beleuchtungseinrichtungen in einem gleichen Lichtemissionsmodul (4) angeordnet sind.

**3.** Beleuchtungssystem nach Anspruch 2, **dadurch gekennzeichnet, dass** die Beleuchtungseinrichtungen mindestens eine Mehrchip-Elektrolumineszenzdiode aufweisen, die im Brennpunkt einer optischen Projektionseinrichtung angeordnet ist, die im Lichtemissionsmodul (4) angeordnet ist.

**4.** Beleuchtungssystem nach Anspruch 1, **dadurch gekennzeichnet, dass** die Beleuchtungseinrichtungen in mehreren Lichtemissionsmodulen (104) angeordnet sind.

**5.** Beleuchtungssystem nach Anspruch 4, **dadurch gekennzeichnet, dass** das jede Beleuchtungseinrichtung mindestens eine Elektrolumineszenzdiode aufweist, wobei die Dioden je eine andere Farbe emittieren.

**6.** Beleuchtungssystem nach einem der Ansprüche 1 bis 5, **dadurch gekennzeichnet, dass** jede Beleuchtungseinrichtung fähig ist, Licht zu emittieren, wobei jedes von einer der Einrichtungen emittierte Licht einen anderen Weißfarbton als die anderen aufweist, wobei diese Farbtöne insbesondere je einer der Begrenzungsmarken des regulären Weiß in einem Chromatizitätsdiagramm entsprechen.

**7.** Beleuchtungssystem nach einem der Ansprüche 1 bis 5, **dadurch gekennzeichnet, dass** jede Beleuchtungseinrichtung fähig ist, Licht zu emittieren, wobei jedes von einer der Einrichtungen emittierte Licht eine Farbe aufweist, wobei die Gesamtheit dieser Farben so ist, dass ein gewünschter regulärer Weißfarbton in einem Chromatizitätsdiagramm über eine Kombination dieser Farben erhalten werden kann.

**8.** Beleuchtungssystem nach einem der Ansprüche 1 bis 7, **dadurch gekennzeichnet, dass** die Beleuchtungseinrichtungen fähig sind, je ein Teilstrahlenbündel (16; 116) zu bilden, wobei die Gesamtheit der Teilstrahlenbündel das globale Strahlenbündel (1; 101) bildet.

**9.** Beleuchtungssystem nach Anspruch 8, **dadurch gekennzeichnet, dass** die Teilstrahlenbündel (16; 116) insbesondere zum größten Teil, sogar insgesamt, übereinanderliegen, um das globale Strahlenbündel (1) zu bilden.

**10.** Beleuchtungssystem nach Anspruch 8, **dadurch gekennzeichnet, dass** die Teilstrahlenbündel (116) in mehreren Gruppen von Teilstrahlenbündeln gruppiert sind, wobei die Teilstrahlenbündel jeder Gruppe insbesondere zum größten Teil übereinanderliegen, um ein Zwischenstrahlenbündel (22) zu bilden, wobei die Gesamtheit der Zwischenstrahlenbündel einander ergänzen und/oder übereinanderliegen und/oder nebeneinanderliegen, um das globale Strahlenbündel (101) zu bilden.

**11.** Beleuchtungssystem nach einem der Ansprüche 8 bis 10, **dadurch gekennzeichnet, dass** jedes Teilstrahlenbündel (16; 116) eine von den Steuereinrichtungen (10 individuell steuerbare Farbe aufweist, um die Farbe des globalen Strahlenbündels (1; 101) zu ändern, das es bildet.

**12.** Beleuchtungssystem nach einem der Ansprüche 1 bis 11, **dadurch gekennzeichnet, dass** eine Vielzahl von Erfassungseinrichtungen (106) so vorgesehen ist, dass diese Erfassungseinrichtungen individuell jeder Beleuchtungseinrichtung zugeordnet sind.

**13.** Beleuchtungssystem nach einem der vorhergehenden Ansprüche, **dadurch gekennzeichnet, dass** die Analyseeinrichtungen Einrichtungen zur Analyse der spektralen Reflektivität der Straße durch Vergleich zwischen dem vom Scheinwerfer emittierten Licht und dem vom Belag rückgestrahlten Licht aufweisen.

**14.** Verfahren zum Beleuchten einer Straßenszene, das von einem Beleuchtungssystem nach einem der vorhergehenden Ansprüche durchgeführt wird, **dadurch gekennzeichnet, dass** es nacheinander einen ersten Schritt der Beleuchtung der Straßenszene, die sich vor dem Kraftfahrzeug erstreckt, durch ein globales Strahlenbündel (1; 101) einer ersten Farbe, einen Schritt der Erfassung eines Lichtstrahls, der durch Reflexion des globalen Strahlenbündels von einem Element der Straßenszene erhalten wird, einen Schritt der Verarbeitung des im vorhergehenden Schritt erfassten Signals, während dessen bestimmt wird, ob die Farbe des reflektierten Lichtstrahls der ersten Farbe des im ersten Beleuchtungsschritt emittierten globalen Strahlenbündels entspricht, und einen Schritt der Änderung der Farbe des projizierten globalen Strahlenbündels abhängig von den Ergebnissen des Signalverarbeitungsschritts enthält.

**15.** Kraftfahrzeug, das ein Beleuchtungssystem (2; 102) nach einem der Ansprüche 1 bis 13 aufweist.


**Claims**

**1.** Lighting system (2; 102) for a motor vehicle, comprising lighting means capable of together emitting an overall beam (1; 101) having at least one colour, acquisition means (6; 106) for acquiring a light ray of said overall beam after reflection of said ray on an element of the road scene, analysis means (14) for analysing the acquired ray to obtain information relating to the colour of said element of the road scene and control means (10) for modifying the colour of the overall beam as a function of this information, **characterized in that** the lighting means each comprise at least one light-emitting diode, the diodes being white with hues different from one another.

**2.** Lighting system according to Claim 1, **characterized in that** the lighting means are disposed in one and the same light emission module (4).

**3.** Lighting system according to Claim 2, **characterized in that** the lighting means comprise at least one multichip light-emitting diode disposed at the focus of an optical projection means disposed in said light emission module (4).

**4.** Lighting system according to Claim 1, **characterized in that** the lighting means are disposed in several light emission modules (104).

**5.** Lighting system according to Claim 4, **characterized in that** each lighting means comprises at least one light-emitting diode, the diodes each emitting a different colour.

6. Lighting system according to one of Claims 1 to 5, **characterized in that** each lighting means is capable of emitting light, each light emitted by one of the means having a white hue different from the others, these hues each notably corresponding to one of the bounds delimiting regulatory white in a chromaticity chart.

7. Lighting system according to one of Claims 1 to 5, **characterized in that** each lighting means is capable of emitting light, each light emitted by one of the means having a colour, the set of these colours being such that a desired regulatory white hue in a chromaticity chart can be obtained via a combination of these colours.

8. Lighting system according to one of Claims 1 to 7, **characterized in that** the lighting means are capable of each forming a sub-beam (16; 116), the set of the sub-beams forming the overall beam (1; 101).

9. Lighting system according to Claim 8, **characterized in that** the sub-beams (16; 116) are superimposed on one another, notably over a major part, even the entirety, to form the overall beam (1).

10. Lighting system according to Claim 8, **characterized in that** the sub-beams (116) are grouped in several groups of sub-beams, the sub-beams of each group being superimposed, notably over a major part, to form an intermediate beam (22), the set of the intermediate beams complementing one another and/or being superimposed and/or being juxtaposed to form said overall beam (101).

11. Lighting system according to one of Claims 8 to 10, **characterized in that** each sub-beam (16; 116) has a colour that can be individually controlled by the control means (10) to modify the colour of the overall beam (1; 101) that it forms.

12. Lighting system according to one of Claims 1 to 11, **characterized in that** a plurality of acquisition means (106) is provided in such a way that these acquisition means are individually associated with each lighting means.

13. Lighting system according to one of the preceding claims, **characterized in that** the analysis means comprise means for analysing the spectral reflectivity of the road, by comparison between the light emitted by the headlight and a light returned by the coating.

14. Method for lighting a road scene implemented by a lighting system according to one of the preceding claims, **characterized in that** it comprises, in succession, a first step of lighting of the road scene which extends in front of the motor vehicle by an overall beam (1; 101) of a first colour, a step of acquisition of a light ray obtained by reflection of the overall beam by an element of said road scene, a step of processing of the signal acquired in the preceding step in which a determination is made as to whether the colour of the reflected light ray corresponds to the first colour of the overall beam emitted in the first lighting step, and a step of modification of the colour of the projected overall beam as a function of the results of the signal processing step.

15. Motor vehicle comprising a light system (2; 102) according to one of Claims 1 to 13.

# FIG.1

# FIG.2

# FIG.3

**RÉFÉRENCES CITÉES DANS LA DESCRIPTION**

**Documents brevets cités dans la description**

- WO 0204247 A1
- DE 102011077282 A1
- DE 102011113956 A1